# FASCICULE DE BREVET EUROPEEN

(11) **EP 4 308 798 B1**
(45) Date de publication et mention de la délivrance du brevet: **20.11.2024**
(21) Numéro de dépôt: 22713701.5
(22) Date de dépôt: 08.03.2022
(51) Int. Cl.: F01D 25/16, F02C 7/06, F04D 29/056, F16C 27/04, F16F 15/023

(54) **DISPOSITIF DE CENTRAGE ET DE GUIDAGE D'UN ARBRE DE TURBOMACHINE D'AÉRONEF**
ZENTRIER- UND FÜHRUNGSVORRICHTUNG FÜR EINE FLUGZEUG-TURBOMASCHINENWELLE
DEVICE FOR CENTERING AND GUIDING A SHAFT OF AN AIRCRAFT TURBOMACHINE

(30) Priorité: 18.03.2021 FR 2102712
(43) Date de publication de la demande: 24.01.2024
(73) Titulaire: SAFRAN AIRCRAFT ENGINES, 75015 Paris (FR)
(72) Inventeur: LEVISSE, Paul Ghislain Albert, 77550 MOISSY-CRAMAYEL (FR); BARET, Emmanuel Fabrice Marie, 77550 MOISSY-CRAMAYEL (FR); BECOULET, Julien Fabien Patrick, 77550 MOISSY-CRAMAYEL (FR); TAN-KIM, Alexandre Jean-Marie, 77550 MOISSY-CRAMAYEL (FR)
(74) Mandataire: Gevers & Orès
(86) Numéro de dépôt international: PCT/FR2022/050410
(87) Numéro de publication internationale: WO 2022/195193

(56) Documents cités:
- DE-A1- 102012 221 369
- DE-A1- 102017 100 572
- FR-A1- 3 096 072
- GB-A- 2 415 019
- JP-A- 2011 144 924
- US-A- 5 380 100
- US-A1- 2015 233 293
- US-A1- 2019 353 051
- US-B1- 10 753 391
- US-B1- 10 794 222

## Description

### Domaine technique de l'invention

La présente invention concerne un dispositif de centrage et de guidage d'un arbre de turbomachine d'aéronef, ainsi qu'une turbomachine d'aéronef.

### Arrière-plan technique

Une turbomachine d'aéronef comprend des arbres, tels qu'un arbre basse pression et un arbre haute pression, qui sont centrés et guidés en rotation par des paliers, en général à roulement et par exemple à rouleaux ou billes.

Un palier à roulement comprend des bagues externe et interne entre lesquelles sont disposés les rouleaux ou les billes. La bague interne est solidaire de l'arbre à guider et la bague externe est fixée à un support de palier qui est une pièce rigide de stator de la turbomachine.

Un arbre de turbomachine peut atteindre un régime très important, typiquement entre 2 000 et 30 000 tours par minute. De tels régimes induisent des excitations des modes propres des arbres qui peuvent avoir des effets néfastes sur le moteur si le mode répond fortement.

Afin de contrôler la position du mode, les paliers sont en général associés à des cages souples qui permettent d'assouplir les conditions aux limites de l'arbre et qui abaissent la fréquence du mode propre. Le mode, moins haut en régime, répond alors moins fortement.

Dans la présente demande, on entend par « cage souple », un organe ou un assemblage qui assure une liaison souple entre la bague externe d'un palier et son support. La souplesse de cette cage est en général assurée par une capacité de déformation élastique de cette cage, par exemple en torsion et/ou en flexion. Pour conférer cette capacité, la cage comprend au moins une série de colonnettes réparties autour de l'axe du palier et s'étendant sensiblement parallèlement à cet axe.

Il existe à ce jour deux technologies de cage souple pour palier.

La première technologie décrite dans les documents FR-A1-3 009 843 et FR-A1-3 078 370 est une cage souple monobloc. Une cage de ce type comprend en général une paroi cylindrique interne à laquelle la bague externe du palier est fixée ou intégrée, et une paroi cylindrique externe ou une bride de fixation au support de palier. Les parois sont reliées entre elles par une série de colonnettes ayant une forme générale en C ou en L, ou par deux séries de colonnettes s'étendant l'une autour de l'autre et reliées ensemble. Les colonnettes et les parois sont alors formées d'une seule pièce.

Une seconde technologie décrite dans le document FR-A1-3 009 843 concerne une cage obtenue par assemblage de colonnettes indépendantes avec le support et la bague. Chaque colonnette comporte un corps de forme allongée et relié à une première extrémité longitudinale de fixation au support et à une seconde extrémité longitudinale de fixation à la bague. Le corps a en section transversale une forme circulaire c'est-à-dire une forme axisymétrique (la forme en section du corps de la colonnette présente une symétrie par rapport à l'axe longitudinal de ce corps). La cage souple équipée de ces colonnettes a également une forme axisymétrique et sa raideur est identique quelle que soit la direction transversale des efforts de sollicitation de la cage.

L'état de la technique comprend également des technologies décrites par US-B1-10 794 222, DE-A4-10 2017 100572, FR-A1-3 096 072 ou DE-A1-10 2012 221369.

L'invention propose un perfectionnement à ces technologies, qui permet notamment d'adapter la raideur de la cage souple en fonction de la direction de sollicitation.

### Résumé de l'invention

L'invention propose un dispositif de centrage et de guidage d'un arbre de turbomachine d'aéronef, ce dispositif comportant :
- une bague externe d'un palier à roulement, cette bague s'étendant autour d'un axe,
- un support annulaire de palier s'étendant autour de l'axe et au moins en partie autour de la bague,
- au moins une série d'éléments de liaison de la bague au support, ces éléments étant élastiquement déformables et répartis autour de l'axe avec une inclinaison par rapport à une direction radiale qui est propre à chaque élément, la bague, le support et les éléments de liaison étant formés d'une seule pièce, caractérisé en ce que lesdits éléments de liaison sont intercalés entre un rebord cylindrique interne de la bague et un rebord cylindrique externe du support qui s'étend autour dudit rebord interne et comportent chacun une première extrémité radialement externe de liaison audit rebord cylindrique externe et une seconde extrémité radialement interne de liaison audit rebord cylindrique interne, et en ce que les éléments de liaison sont enfermés dans un logement annulaire délimité radialement par les rebords, le logement annulaire étant fermé latéralement par un voile annulaire élastiquement déformable et reliant les rebords en étant formé d'une seule pièce avec la bague et le support.

La bague, le support et les éléments de liaison sont formés d'une seule pièce, par exemple par fabrication additive. Ceci permet de simplifier la fabrication du dispositif en supprimant des étapes d'assemblage et de réglage. La distribution des éléments de liaison autour du dispositif et leur inclinaison par rapport à une direction radiale qui est propre à chacun des éléments permet d'ajuster la raideur du dispositif dans les directions précitées.

Un dispositif selon la technique antérieure équipée de colonnettes à corps axisymétriques possède une même raideur dans toutes les directions transversales (perpendiculaires à l'axe), et ce quelle que soit la position des colonnettes autour de leurs axes respectifs. Cela signifie que la raideur du dispositif dans une première direction perpendiculaire à l'axe (par exemple dans un plan horizontal) est identique à la raideur du dispositif dans une seconde direction perpendiculaire à l'axe (par exemple dans un plan vertical). L'invention permet au contraire de conférer au dispositif des raideurs différentes selon les directions transversales de sollicitation. Avantageusement, le dispositif comprend au moins deux raideurs différentes en directions transversales par rapport à l'axe de l'arbre. Il est en effet particulièrement intéressant pour stabiliser un arbre de fournir des raideurs différentes dans deux directions transversales et perpendiculaires entre elles car cela permet de repousser la vitesse d'apparition d'instabilités de l'arbre guidé par le dispositif.

Le dispositif selon l'invention peut comprendre une ou plusieurs des caractéristiques ci-dessous, prises isolément les unes avec les autres ou en combinaison les unes avec les autres :
- la bague externe comprend une surface cylindrique externe définissant avec une surface cylindrique interne du support un espace annulaire de formation d'un film d'huile d'amortissement ;
- les éléments de liaison sont situés à une extrémité axiale de l'espace annulaire et sont situés sur une circonférence ayant un diamètre sensiblement égal au diamètre de cet espace ;
- les éléments de liaison sont formés par des lames ;
- les lames ont chacune une forme générale en S ;
- le voile a une forme générale de soufflet ;
- une première série de lames et un premier voile sont situés à une extrémité axiale du dispositif, et une seconde série de lames et un second voile sont situés à une extrémité axiale opposée du dispositif ;
- les premier et second voiles forment des étanchéités latérales de l'espace annulaire, le support comportant au moins un orifice d'alimentation et au moins un orifice d'évacuation en huile de cet espace.

L'invention concerne également une turbomachine d'aéronef, comportant au moins un dispositif tel que décrit dans ce qui précède.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] La figure 1 est une vue schématique en coupe axiale et en perspective d'un dispositif de guidage et de centrage d'un palier de turbomachine d'aéronef, selon la technique antérieure ;
[Fig.2] La figure 2 est une vue schématique en perspective d'un dispositif de guidage et de centrage d'un palier de turbomachine d'aéronef selon une forme de réalisation de l'invention ;
[Fig.3] La figure 3 est une semi-vue schématique en coupe de la figure 2 ;
[Fig.4] La figure 4 est une vue très schématique en coupe de la figure 3 ; et
[Fig.5] La figure 5 est vue schématique en perspective d'un dispositif de guidage et de centrage d'un palier de turbomachine d'aéronef selon une autre forme de réalisation de l'invention, montrant une extrémité axiale du dispositif en transparence.

### Description détaillée de l'invention

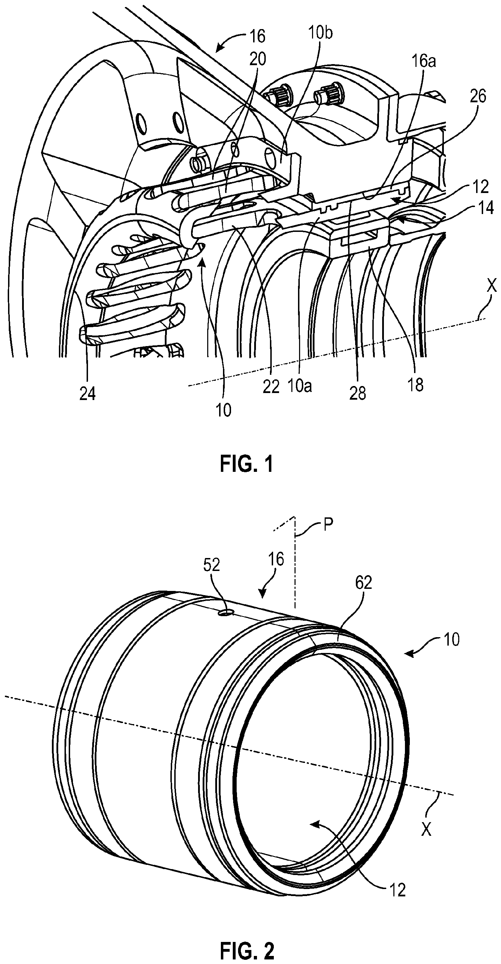

On se réfère d'abord à la figure 1 qui représente une première technologie de cage souple monobloc 10 selon la technique antérieure.

La cage souple 10 assure la liaison d'une bague externe 12 d'un palier à roulement 14 à un support annulaire 16 de ce palier 14.

Le palier 14 comporte, en plus de la bague externe 12, une bague interne 18 qui est solidaire d'un arbre de la turbomachine qui n'est pas représenté. Les bagues 12, 18 définissent un chemin de roulement de rouleaux dans l'exemple représenté.

La bague externe 12 est ici intégrée à une paroi cylindrique interne 10a de la cage 10 qui comprend une bride annulaire 10b radialement externe de fixation au support 16 par des moyens du type vis-écrou non représentés.

La cage 10 comprend ici deux séries de colonnettes 20, 22, respectivement radialement interne et externe par rapport à l'axe X du palier 14 et de l'arbre qu'il guide. L'axe X correspond à l'axe moteur de la turbomachine.

Les colonnettes 20, 22 sont réparties autour de l'axe X et s'étendent parallèlement à cet axe. Les colonnettes 20 s'étendent autour des colonnettes 22 et ont une première de leurs extrémités longitudinales qui est reliée à la bride 10b, et une seconde de leurs extrémités longitudinales qui est reliée aux autres colonnettes 22 par une portion annulaire 24 à section en C de la cage 10. Les colonnettes 22 s'étendent depuis la paroi 10a, dans le prolongement de celle-ci, jusqu'à cette portion 24.

Le support 16 fait partie d'un stator de la turbomachine et a ici une forme générale sensiblement tronconique. À sa périphérie interne, il comprend une surface cylindrique interne 16a de frettage d'un anneau 26 qui s'étend autour de la paroi 10a de la cage et qui définit avec celle-ci un espace annulaire 28 alimenté en huile afin de former un film d'huile d'amortissement des vibrations transmises par le palier 14 en fonctionnement.

Dans ce type de technologie, la raideur de la cage 10 et du palier 14 est la même dans toutes les directions transversales (perpendiculaires à l'axe X).

Cependant, d'un point de vue dynamique, il peut être intéressant d'avoir des raideurs différentes dans deux directions orthogonales : cela fournit un effet stabilisateur au dispositif en repoussant la vitesse d'apparition d'instabilités dues à l'amortissement interne de l'arbre.

En effet, en créant des souplesses différentes selon au moins deux directions, on observe l'apparition d'au moins deux modes contre un seul et unique mode dans le cas axisymétrique.

Dans le cas où la raideur radiale initiale de la cage souple axisymétrique K est telle que K1<K<K2 où K1 et K2 sont les raideurs de la cage souple asymétrique respectivement dans les directions différentes 1 et 2 transverses à l'axe X, alors les fréquences des modes créés encadreront la fréquence du mode unique initial.

Dans ce cas, la fréquence d'apparition possible des instabilités est augmentée, ce qui permet de limiter le risque d'instabilité potentiellement dommageable pour le moteur.

Le contrôle des déplacements de l'arbre selon l'azimut peut aussi être exploité pour améliorer les performances du moteur. En effet, sous chargement mécanique ou thermique la carcasse du moteur se déforme, ces distorsions génèrent des ouvertures et fermetures de jeux différentes selon l'azimut. Cela implique une dégradation de la performance du moteur qui pourrait être limitée si le déplacement dynamique est optimisé pour compenser une partie de la distorsion, par exemple en raidissant la cage souple dans la direction de la fermeture de jeu et en l'assouplissant dans la direction de l'ouverture de jeu. La présente invention permet de répondre à ce besoin grâce à des éléments de liaison de la bague 12 au support 16, qui sont formés d'une seule pièce avec la bague et le support.

Les figures 2 à 4 illustrent un mode de réalisation d'un dispositif, selon l'invention, de centrage et de guidage d'un arbre de turbomachine d'aéronef. Le dispositif est symétrique par rapport à un plan P médian perpendiculaire à un axe X, comme le montre la figure 2. Cela signifie que le dispositif comporte deux extrémités axiales identiques. Autrement dit, ce qui est décrit dans ce qui suit pour une première extrémité axiale du dispositif s'applique également à l'autre extrémité axiale, opposée à la première.

Le dispositif comprend :
- une bague externe 12 d'un palier à roulement, cette bague 12 s'étendant autour d'un axe X,
- un support annulaire 16 de palier s'étendant autour de l'axe X et au moins en partie autour de la bague 12, et
- au moins une série d'éléments 40 de liaison de la bague 12 au support 16, ces éléments 40 étant répartis autour de l'axe X et comportant chacun une première extrémité 40a de liaison au support 16 et une seconde extrémité 40b de liaison à la bague 12.

La bague 12, le support 16 et les éléments 40 de liaison sont formés d'une seule pièce. Autrement dit, le dispositif est monobloc. À la différence de la cage souple 10 de la technique antérieure où seules les colonnettes 20, 22, la paroi 10a et la bride 10b sont formés d'une seule pièce, le support 16 est ici également formé d'une seule pièce avec la bague 12 et les éléments 40.

La bague 12 externe comprend une partie cylindrique 12b qui comporte à sa périphérie externe une surface cylindrique externe 12d définissant avec le support 16 un espace annulaire 50 de formation d'un film d'huile d'amortissement. La bague 12 comprend également à chacune de ses extrémités un rebord cylindrique interne 12c s'étendant dans le prolongement axial de la partie cylindrique 12b. On comprend par rebord cylindrique interne 12c un rebord qui s'étend, dans le prolongement axial de la bague 12, au plus près de l'axe X. L'épaisseur du rebord 12c est inférieure à l'épaisseur de la partie cylindrique 12b de la bague 12.

Le support 16 comprend une partie cylindrique 16b qui s'étend au moins en partie autour de la partie cylindrique 12b de la bague 12. La partie cylindrique 16b comporte à sa périphérie interne une surface cylindrique interne 16a définissant avec la surface cylindrique externe 12d l'espace annulaire 50 précité de formation d'un film d'huile d'amortissement.

Le support 16 comprend au moins un orifice d'alimentation 52 en huile et au moins un orifice d'évacuation en huile, chacun de ces orifices communiquant avec l'espace annulaire 50. Ces orifices sont situés sur la périphérie externe de la partie cylindrique 16b. L'orifice d'alimentation 52 peut déboucher dans une première gorge annulaire, non visible ici, qui permet d'assurer une équirépartition de l'huile dans l'espace annulaire 50. Dans le cas où plusieurs orifices d'alimentation 52 sont présents, plusieurs premières gorges annulaires assurent la répartition de l'huile

Le support 16 comprend également à chacune de ses extrémités un rebord cylindrique externe 16c qui s'étend dans le prolongement axial de la partie cylindrique 16b, et qui s'étend autour du rebord interne 12c. On comprend par rebord cylindrique externe 16c un rebord qui s'étend, dans le prolongement axial du support 16, au plus loin de l'axe X. L'épaisseur du rebord 16c est inférieure à l'épaisseur de la partie cylindrique du support 16.

Par ailleurs, de manière non limitative, le rebord cylindrique interne 12c peut être nommé premier rebord cylindrique 12c et le rebord cylindrique externe 16c peut être nommé second rebord cylindrique 16c.

Les éléments 40 de liaison sont situés à une extrémité axiale de l'espace annulaire 50. Ils sont situés sur une circonférence C1 ayant un diamètre sensiblement égal au diamètre de l'espace 50. On entend par là que le centre géométrique de chacun des éléments 40 se situe sur cette circonférence C1. On comprend qu'une partie de la forme de l'élément 40 peut être en dehors de cette circonférence C1, en d'autres termes une partie de l'élément 40 peut se situer sur une circonférence avec un diamètre sensiblement supérieur ou inférieur au diamètre de la circonférence C1.

Les éléments 40 de liaison sont élastiquement déformables et peuvent être formés par des lames, elles-mêmes élastiquement déformables. On entend par lame une bande qui est fine et longue, dont l'épaisseur est inférieure à la largeur, largeur qui s'étend dans une direction sensiblement parallèle à l'axe X. Les lames sont intercalées entre le rebord cylindrique interne 12c de la bague 12 et le rebord cylindrique externe 16c du support 16. En particulier, chacune des lames est reliée au rebord 16c du support 16 par sa première extrémité 40a, radialement externe, et au rebord 12c de la bague 12 par sa seconde extrémité 40b, radialement interne.

Les éléments 40 de liaison sont enfermés dans un logement 60 annulaire. Ce logement 60 est délimité radialement par le rebord cylindrique interne 12c et le rebord cylindrique externe 16c, et est fermé latéralement par la surépaisseur cumulée des parties cylindriques 12b, 16b, entre lesquelles s'étend l'espace annulaire 50, et par un voile 62 annulaire. On entend par voile 62 une paroi qui est fine, en particulier l'épaisseur du voile 62 est inférieure à l'épaisseur des rebords 12c, 16c qu'il relie en étant formé d'une seule pièce avec la bague 12 et le support 16. Le voile 62 est élastiquement déformable et peut prendre une forme ondulée en direction radiale. Le voile 62 peut, par exemple, prendre une forme générale de soufflet ou avoir en section une forme en Ω.

Une telle forme permet au voile 62 de pouvoir absorber les déplacements relatifs entre la bague 12 et le support 16 selon une direction axiale. Le voile 62 présente aussi l'avantage d'assurer une étanchéité latérale de l'espace annulaire 50 de formation du film d'huile d'amortissement. En effet, le voile 62 étant d'une seule pièce avec la bague 12 et le support 16, l'huile ne peut s'échapper latéralement du dispositif.

On comprend que le logement 60 peut contenir de l'huile provenant de l'espace annulaire 50. Autrement dit, les éléments 40 de liaison peuvent baigner dans l'huile.

Au moins un trou d'évacuation d'huile, non représenté, peut être présent dans le logement 60. Ce trou est calibré de sorte à évacuer l'huile du logement 60 avec un débit équivalent au débit d'huile nécessaire à la formation du film d'huile d'amortissement dans l'espace annulaire 50. En outre, pour assurer une meilleure évacuation, les trous peuvent déboucher dans une seconde gorge annulaire.

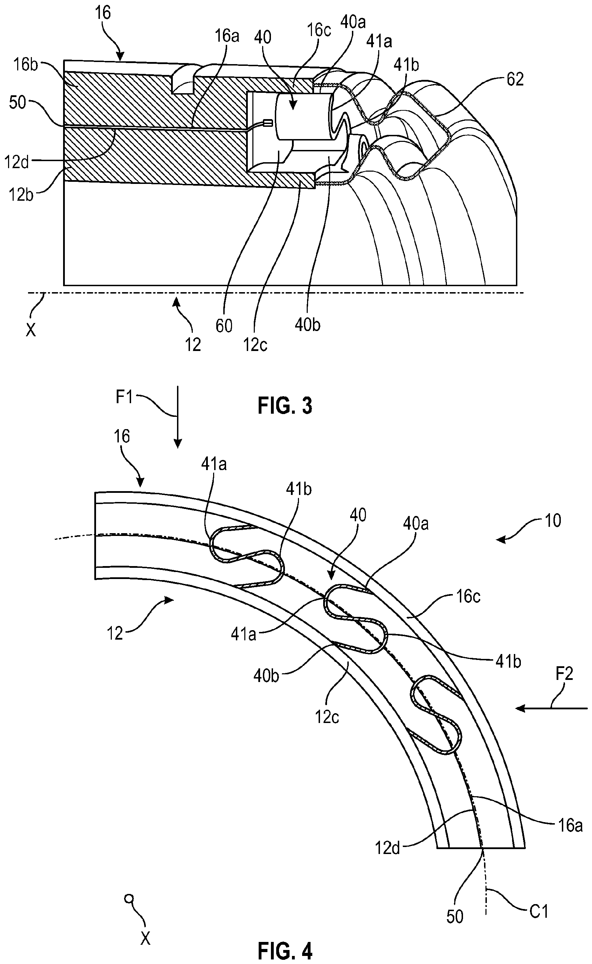

Dans une variante non représentée ici, des segments annulaires délimitent axialement l'espace annulaire 50. On comprend que seul l'espace annulaire 50 contient de l'huile. Chaque segment comprend une fuite calibrée de sorte à évacuer l'huile de l'espace annulaire 50 avec un débit sensiblement inférieur au débit d'alimentation de l'espace annulaire 50. Cette fuite est calibrée pour avoir un débit sensiblement inférieur au débit d'évacuation du trou d'évacuation du logement 60. L'huile est évacuée par une sortie en point bas. Dans l'exemple donné par les figures 3 et 4, les lames ont chacune une forme générale en « S ». Une telle forme présente l'intérêt d'avoir des courbures 41a, 41b au niveau des extrémités 40a, 40b de la lame. En effet, une première courbure 41a, au niveau de la première extrémité 40a, est orientée selon un premier sens, et une seconde courbure 41b, au niveau de la seconde extrémité 40b, est orientée selon un second sens, opposé au premier.

Une forme en « S » a aussi l'avantage d'avoir un centre de symétrie. Ce centre de symétrie correspond au centre géométrique de la forme et est sensiblement situé sur la circonférence C1. De la sorte, une première jonction entre la première extrémité 40a et le support 16 est symétrique, par rapport à ce centre de symétrie, à une seconde jonction entre la seconde extrémité 40b et la bague 12. En outre, la première jonction, la seconde jonction et le centre de symétrie, situés dans le même plan, sont alignés radialement avec le centre du dispositif par lequel passe l'axe X.

Un autre avantage de la forme en « S » est de conférer aux éléments 40 au moins deux raideurs différentes en fonction de la direction d'une sollicitation. En effet, avec une sollicitation dite verticale, c'est-à-dire dans une direction tangente aux courbures 41a, 41b, les éléments 40 peuvent se déformer. Les courbures 41a, 41b assurent la souplesse des éléments 40. Avec une sollicitation dite horizontale, perpendiculaire à la sollicitation verticale, les éléments 40 ne se déforment pas.

Cette forme en « S » n'est pas limitative et les lames peuvent adopter toute forme offrant une raideur différente dans deux directions dans un plan orthogonal à l'axe de rotation de l'arbre moteur, autrement dit l'axe X.

Les éléments 40 de liaison, ou lames, sont disposés autour de l'axe X. Ils peuvent être répartis avec un pas régulier, c'est-à-dire qu'entre deux éléments 40 consécutifs, la distance est identique. Ils peuvent aussi être répartis avec un pas irrégulier, c'est-à-dire que la distance entre les éléments 40 peut varier. Dans un exemple non limitatif, on peut avoir un premier ensemble d'éléments 40, espacés les uns des autres d'une même distance ou d'un même pas, et un deuxième ensemble d'éléments 40, espacés les uns des autres de la même distance mais espacé du premier ensemble avec une distance différente. On comprend ainsi que le pas entre les éléments 40 peut être régulier et/ou irrégulier.

Le dispositif peut être réalisé par fabrication additive. Celle-ci ci peut être une fabrication additive métallique, par frittage de poudre par exemple. Le dispositif pouvant comporter des éléments 40 avec une conformation particulière, une telle technique permet, entre autres, une réalisation simplifiée du dispositif, en supprimant des étapes d'assemblage et de réglage. De plus, cela permet de pouvoir modifier aisément et rapidement la configuration des pièces durant la phase de développement.

Sur la figure 4 est représentée, en coupe transverse, une portion du dispositif. Un ensemble d'éléments 40 est répartis autour de l'axe X. On comprend que la cage 10 est non axisymétrique par rapport à l'axe X et sa raideur n'est pas non plus axisymétrique. Chacun des éléments 40 est disposé avec une inclinaison donnée par rapport à la direction radiale. Autrement dit, chaque élément 40 a une inclinaison par rapport à la direction radiale qui lui est propre. De la sorte, une raideur globale est obtenue lorsque le dispositif est sollicité selon une première direction (flèche F1), ou selon une seconde direction (flèche F2) orthogonale à la première direction. La première direction peut par exemple être verticale et la seconde direction, orthogonale à la première, peut par exemple être horizontale. Grâce à cette inclinaison donnée, on comprend que chaque élément 40 se déforme différemment selon les sollicitations F1 ou F2, et a une raideur qui lui est propre. De la sorte, tous les éléments 40 travaillent, ce qui permet de limiter la concentration de contraintes.

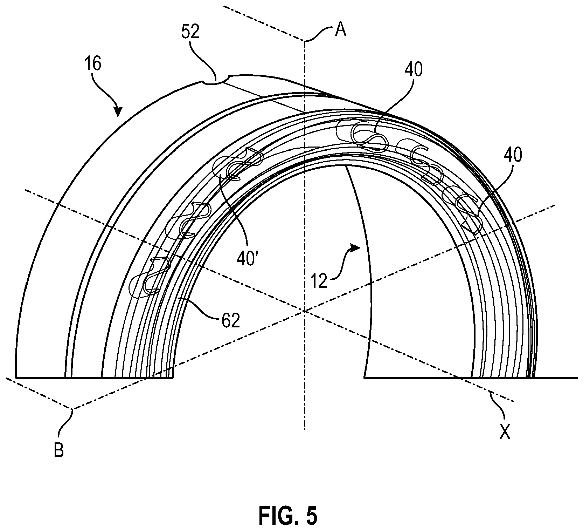

On s'intéresse maintenant à la figure 5 qui illustre un autre exemple de réalisation du dispositif. Dans cet exemple, le dispositif est similaire à ce qui a été décrit précédemment. Il comporte un premier ensemble d'éléments 40 et un deuxième ensemble d'éléments 40'. Le deuxième ensemble d'éléments 40' est symétrique au premier ensemble d'éléments 40 par rapport à un plan A de symétrie. Le dispositif peut également comporter, bien que non représentés ici, deux autres ensembles d'éléments 40, 40' : un troisième ensemble d'éléments 40' et un quatrième ensemble d'éléments 40. Le troisième ensemble d'éléments 40' peut être positionné en regard du premier ensemble d'éléments 40 par rapport à un plan B de symétrie. On comprend que ce troisième ensemble est identique au deuxième ensemble. Le quatrième ensemble d'éléments 40 peut être positionné en regard du deuxième ensemble d'éléments 40' par rapport au plan B, le quatrième ensemble étant symétrique au deuxième ensemble. On comprend que le quatrième ensemble est également symétrique au troisième ensemble par rapport au plan A et on comprend également que le quatrième ensemble est identique au premier ensemble d'éléments 40.

Un premier pas donné sépare les éléments 40, 40' pour chaque ensemble d'éléments 40, 40'. On comprend que ce premier pas est identique pour chacun des ensembles. Un second pas, différent du premier pas, sépare chaque ensemble. Ce second pas peut être inférieur ou supérieur au premier pas.

L'invention concerne également une turbomachine d'aéronef comportant au moins un dispositif tel que décrit dans ce qui précède.

Le dispositif et la cage souple selon l'invention sont ainsi avantageux dans la mesure où la raideur de la cage est différente selon la position angulaire de l'effort transmis à la cage dans une direction transversale à son axe principal. Il est en effet particulièrement intéressant pour stabiliser un arbre de fournir des raideurs différentes dans des directions transversales différentes car cela permet de repousser la vitesse d'apparition d'instabilités de l'arbre guidé par le dispositif.

## Revendications

1. Dispositif de centrage et de guidage d'un arbre de turbomachine d'aéronef, ce dispositif comportant :
- une bague externe (12) d'un palier à roulement, cette bague s'étendant autour d'un axe (X),
- un support annulaire (16) de palier s'étendant autour de l'axe (X) et au moins en partie autour de la bague (12),
- au moins une série d'éléments (40) de liaison de la bague au support, ces éléments étant élastiquement déformables et répartis autour de l'axe (X) avec une inclinaison par rapport à une direction radiale qui est propre à chaque élément, la bague, le support et les éléments de liaison étant formés d'une seule pièce, **caractérisé en ce que**
lesdits éléments de liaison sont intercalés entre un rebord cylindrique interne (12c) de la bague (12) et un rebord cylindrique externe (16c) du support (16) qui s'étend autour dudit rebord interne et comportent chacun une première extrémité (40a) radialement externe de liaison audit rebord cylindrique externe et une seconde extrémité (40b) radialement interne de liaison audit rebord cylindrique interne, et **en ce que** les éléments (40) de liaison sont enfermés dans un logement annulaire (60) délimité radialement par lesdits rebords (12c, 16c), ledit logement annulaire étant fermé latéralement par un voile annulaire (62) élastiquement déformable et reliant lesdits rebords (12c, 16c) en étant formé d'une seule pièce avec la bague (12) et le support (16).

2. Dispositif selon la revendication précédente, dans lequel la bague externe (12) comprend une surface cylindrique externe (12d) définissant avec une surface cylindrique interne (16a) du support (16) un espace (50) annulaire de formation d'un film d'huile d'amortissement.

3. Dispositif selon la revendication précédente, dans lequel les éléments (40) de liaison sont situés à une extrémité axiale dudit espace (50) et sont situés sur une circonférence (C1) ayant un diamètre sensiblement égal au diamètre dudit espace.

4. Dispositif selon l'une des revendications précédentes, dans lequel les éléments (40) de liaison sont formés par des lames.

5. Dispositif selon la revendication précédente, dans lequel les lames ont chacune une forme générale en S.

6. Dispositif selon l'une quelconque des revendications 4 ou 5, dans lequel une première série de lames et un premier voile (62) sont situés à une extrémité axiale du dispositif, et une seconde série de lames et un second voile (62) sont situés à une extrémité axiale opposée du dispositif.

7. Dispositif selon la revendication précédente, en dépendance de la revendication 2 ou 3, lesdits premier et second voiles (62) forment des étanchéités latérales dudit espace (50), le support comportant au moins un orifice (52) d'alimentation et au moins un orifice d'évacuation en huile de cet espace.

8. Dispositif selon l'une quelconque des revendications précédentes, dans lequel le voile (62) a une forme générale de soufflet.

9. Turbomachine d'aéronef, comportant au moins un dispositif selon l'une des revendications précédentes.

## Patentansprüche

1. Zentrier- und Führungsvorrichtung einer Flugzeug-Turbotriebwerkwelle, wobei diese Vorrichtung umfasst:
- einen Außenring (12) eines Walzlagers, wobei sich dieser Ring um eine Achse (X) erstreckt,
- eine ringförmige Lagerhalterung (16), die sich um die Achse (X) und mindestens teilweise um den Ring (12) erstreckt,
- mindestens eine Reihe von Elementen (40) zur Verbindung des Rings mit der Halterung, wobei diese Elemente elastisch verformbar sind und um die Achse (X) mit einer Neigung in Bezug auf eine radiale Richtung verteilt sind, die jedem Element eigen ist,
wobei der Ring, die Halterung und die Verbindungselemente einstückig gebildet sind,
**dadurch gekennzeichnet, dass** die Verbindungselemente eingefügt sind zwischen einer zylindrischen Innenkante (12c) des Rings (12) und einer zylindrischen Außenkante (16c) der Halterung (16), die sich um die Innenkante erstreckt, und jeweils ein erstes, radial äußeres Ende (40a) zur Verbindung mit der zylindrischen Außenkante und ein zweites, radial inneres Ende (40b) zur Verbindung mit der zylindrischen Innenkante umfassen, und dadurch, dass die Verbindungselemente (40) in einem ringförmigen Sitz (60) umschlossen sind, der radial von den Kanten (12c, 16c) begrenzt wird, wobei der ringförmige Sitz seitlich durch eine ringförmige Bahn (62) verschlossen wird, die elastisch verformbar ist und die Kanten verbindet (12c, 16c), indem sie einstückig mit dem Ring (12) und der Halterung (16) gebildet ist.

2. Vorrichtung nach dem vorstehenden Anspruch, wobei der Außenring (12) eine zylindrische Außenfläche (12d) umfasst, die mit einer zylindrischen Innenfläche (16a) der Halterung (16) einen ringförmigen Raum (50) zur Bildung eines Dämpfungsölfilms definiert.

3. Vorrichtung nach dem vorstehenden Anspruch, wobei sich die Verbindungselemente (40) an einem axialen Ende des Raums (50) befinden und sich auf einem Umfang (C1) befinden, der einen Durchmesser im Wesentlichen gleich dem Durchmesser des Raums aufweist.

4. Vorrichtung nach einem der vorstehenden Ansprüche, wobei die Verbindungselemente (40) durch Klingen gebildet sind.

5. Vorrichtung nach dem vorstehenden Anspruch, wobei die Klingen jeweils eine allgemeine S-Form aufweisen.

6. Vorrichtung nach einem der Ansprüche 4 oder 5, wobei sich eine erste Reihe von Klingen und eine erste Bahn (62) an einem axialen Ende der Vorrichtung befinden und eine zweite Reihe von Klingen und eine zweite Bahn (62) an einem gegenüberliegenden axialen Ende der Vorrichtung befinden.

7. Vorrichtung nach dem vorstehenden Anspruch, in Abhängigkeit von Anspruch 2 oder 3, wobei die erste und die zweite Bahn (62) seitliche Abdichtungen des Raums (50) bilden, wobei die Halterung mindestens eine Zufuhröffnung (52) und mindestens eine Ablassöffnung für Öl aus diesem Raum umfasst.

8. Vorrichtung nach einem der vorstehenden Ansprüche, wobei die Bahn (62) eine allgemeine Balgform aufweist.

9. Flugzeug-Turbotriebwerk, das mindestens eine Vorrichtung nach einem der vorstehenden Ansprüche umfasst.

## Claims

1. A device for centring and guiding an aircraft turbine engine shaft, this device comprising:
- an outer ring (12) of a rolling bearing, this ring extending around an axis (X),
- an annular bearing support (16) extending around the axis (X) and at least partly around the ring (12),
- at least one series of connecting elements (40) for connecting the ring to the support, these elements being elastically deformable and distributed around the axis (X) with an inclination relative to a radial direction which is specific to each element,
the ring, the support and the connecting elements being formed in a single piece,
**characterised in that** said connecting elements being interposed between an inner cylindrical rim (12c) of the ring (12) and an outer cylindrical rim (16c) of the support (16) which extends around said inner rim and each comprising a first radially outer end (40a) for connecting to said outer cylindrical rim and a second radially inner end (40b) for connecting to said inner cylindrical rim, and **in that** the connecting elements (40) are enclosed in an annular housing (60) delimited radially by said rims (12c, 16c), said annular housing being closed laterally by an elastically deformable annular web (62) connecting said rims (12c, 16c) and being formed in a single piece with the ring (12) and the support (16).

2. The device according to the preceding claim, wherein the outer ring (12) comprises an outer cylindrical surface (12d) defining with an inner cylindrical surface (16a) of the support (16) an annular space (50) for forming a damping oil film.

3. The device according to the preceding claim, wherein the connecting elements (40) are located at an axial end of said space (50) and are located on a circumference (C1) having a diameter substantially equal to the diameter of said space.

4. The device according to one of the preceding claims, wherein the connecting elements (40) are formed by blades.

5. The device according to the preceding claims, wherein the blades are each generally S-shaped.

6. The device according to any one of claims 4 or 5, wherein a first series of blades and a first web (62) are located at one axial end of the device, and a second series of blades and a second web (62) are located at an opposite axial end of the device.

7. The device according to the preceding claim, dependent on claim 2 or 3, said first and second webs (62) form lateral seals for said space (50), the support comprising at least one supply orifice (52) and at least one orifice for evacuating oil from this space.

8. The device according to any one of the preceding claims, wherein the web (62) is generally bellows-shaped.

9. An aircraft turbine engine, comprising at least one device according to one of the preceding claims.
